# EUROPEAN PATENT APPLICATION

(11) **EP 4 765 754 A1**
(43) Date of publication of application: **24.06.2026**
(21) Application number: 24864562.4
(22) Date of filing: 09.09.2024
(51) Int. Cl.: H04L 41/0663

(54) **CONTENT GENERATION METHOD AND APPARATUS**

(30) Priority: 14.09.2023 CN 202311188823
(71) Applicant: HUAWEI TECHNOLOGIES CO., LTD., Shenzhen 518129 (CN)
(72) Inventor: LIU, Yu, Shenzhen, Guangdong 518129 (CN); WANG, Hao, Shenzhen, Guangdong 518129 (CN); WANG, Bo, Shenzhen, Guangdong 518129 (CN); ZHANG, Yihao, Shenzhen, Guangdong 518129 (CN); REN, Bo, Shenzhen, Guangdong 518129 (CN); ZHANG, Qi, Shenzhen, Guangdong 518129 (CN); JIANG, Jian, Shenzhen, Guangdong 518129 (CN)
(74) Representative: Gill Jennings & Every LLP
(86) International application number: PCT/CN2024/117663
(87) International publication number: WO 2025/055842

(57) **Abstract**

A content generation method is provided, applied to a terminal device. The method includes: obtaining input data of a content generation model; uploading the input data to a server via a first routing path; receiving first content returned by the server, where the first content is generated by a first content generation model deployed on the server; and when an abnormality occurs in obtaining the first content via the first routing path, inputting, via a second routing path, the input data to a locally deployed second content generation model, to obtain second content, where a quantity of parameters of the second content generation model is less than a quantity of parameters of the first content generation model. According to the content generation method provided in this application, when a content generation model deployed on a server side responds abnormally, a locally deployed miniaturized content generation model is used to generate required content, to avoid impact on a content generation service when a network abnormality or a server abnormality occurs.

## Description

This application claims priority to Chinese Patent Application No. 202311188823.7, filed on September 14, 2023 and entitled "CONTENT GENERATION METHOD AND APPARATUS", which is incorporated herein by reference in its entirety.

### TECHNICAL FIELD

This application relates to the field of terminal device technologies, and in particular, to a content generation method and apparatus.

### BACKGROUND

Artificial intelligence generated content (AI generated content, AIGC) uses artificial intelligence technologies to generate content, which is a new content production manner following professional-generated content (professional-generated content, PGC) and user-generated content (user-generated content, UGC), creating a brand-new form of digital content generation and interaction. A core idea of an AIGC technology is to use artificial intelligence algorithms to generate content with specific creativity and quality. Through model training and learning from a large amount of data, AIGC can generate, based on an input condition and guidance, content related to the input condition and guidance. For example, a keyword, a description, or a text is input, so that AIGC can generate an article, an image, an audio, or the like that matches the keyword, the description, or the text.

In an existing AIGC service (for example, ChatGPT or Midjourney), a model is usually deployed in a cloud. A user inputs data by using a client deployed on a terminal device, and the AIGC model deployed in the cloud responds to the input of the user and returns generated content. However, when the terminal is in an environment with no network signal or poor network signal, the AIGC service is abnormal, and the user cannot obtain the generated content in a timely manner.

### SUMMARY

Embodiments of this application provide a content generation method, so that a terminal can still continuously respond to a content generation request when a network is abnormal.

According to a first aspect, this application provides a content generation method, applied to a terminal device. The method includes: obtaining input data of a content generation model (which may be referred to as an AIGC model); uploading the input data to a server via a first routing path; receiving first content returned by the server, where the first content is generated, in response to the input data, by a first content generation model deployed on the server, and the first content generation model is a generative large model; and when an abnormality occurs in obtaining the first content via the first routing path, inputting, via a second routing path, the input data to a locally deployed second content generation model, to obtain second content, where a quantity of parameters of the second content generation model is less than a quantity of parameters of the first content generation model.

According to the content generation method provided in this application, a miniaturized content generation model is deployed on a terminal, and a large content generation model is deployed on a server side, to achieve the following: When the generative large model deployed at a remote end (that is, on the server side) responds normally, content is generated by the content generation model deployed on the server side, to obtain content with high quality; and when the content generation model deployed on the server side responds abnormally, the locally deployed miniaturized content generation model is used to generate required content, so that a content generation service can still be continuously obtained when a network abnormality or a server abnormality occurs.

The abnormality in obtaining the first content via the first routing path may be understood as an abnormality in obtaining content due to a response abnormality of the generative large model deployed at the remote end, for example, one or more of an abnormality in quality of content output by the generative large model in response to the input data and an abnormality in time at which the generative large model outputs the content in response to the input data.

For example, due to a large quantity of parameters (usually reaching a level of hundreds of billions or trillions) of the generative large model, the generative large model may experience a phenomenon of "cognitive degradation" after a training update. For example, accuracy of a generated answer is reduced, or a generated answer is irrelevant to or misaligned with a question. For another example, the generative large model is deployed in a cloud to provide a content generation cloud service for the public. When there are a large quantity of access users, an inference time of the generative large model may be excessively long due to insufficient computing power, leading to an excessively long response time for the users.

In another example, the abnormality may also be understood as an abnormality that causes the terminal to fail to receive a response from the generative large model, or causes the terminal to fail to receive a response from the generative large model within a preset time, for example, one or more of an abnormality in a communication link between the terminal device and the server, an abnormality in a response output of the first content generation model deployed on the server, and an abnormality of the server.

Optionally, the second content generation model may be a generative model that is obtained by compressing the first content generation model and that has a small quantity of parameters. For example, the second content generation model is a model obtained after compression processing such as knowledge distillation, quantization, and pruning is performed on the first content generation model.

In another example, the first content generation model and the second content generation model may alternatively be generative models separately obtained through training. However, the first content generation model and the second content generation model output content in a same format in response to same input data. For example, in response to the input data, the first content generation model and the second content generation model output content in a picture format, content in a text format, or the like.

In a possible implementation, the server is a cloud server. In other words, the generative large model is deployed in the cloud to provide a content generation service for a user.

In a possible implementation, an auxiliary small model is further deployed on the terminal device, and the auxiliary small model includes a multi-layer neural network. The second content generation model includes an output layer and a neural network with a plurality of intermediate layers. A specific implementation of inputting, via the second routing path, the input data to the locally deployed second content generation model, to obtain the second content is as follows: The input data is used as an input of both the second content generation model and the auxiliary small model, the input data is processed by the multi-layer neural network to obtain a first processing result, and the input data is processed by the neural network with a plurality of intermediate layers to obtain a second processing result; and the output layer processes the first processing result and the second processing result, and outputs the second content.

The auxiliary small model is disposed on the terminal, and the auxiliary small model and the locally deployed second content generation model work collaboratively, to achieve a response output that meets some customized requirements of the user. For example, different users may have different preferences. For example, some users may want to interact by using modern texts. In this case, an auxiliary small model may be trained on modern texts. After the auxiliary small model acts on the locally deployed second content generation model, the output layer of the locally deployed second content generation model outputs a modern text that meets the user preference. However, some users may prefer "zhuaiwen" (a showy, classically-inspired style), favoring interaction in classical Chinese. In this case, an auxiliary small model may be trained on classical Chinese texts. After the auxiliary small model acts on the locally deployed second content generation model, the output layer of the locally deployed second content generation model outputs a modern text that meets the user preference.

The first content generation model deployed on the server may be referred to as a remote AIGC large model, and the second content generation model deployed locally on the terminal may be referred to as a local AIGC small model. It may be understood that the second content generation model is referred to as a local AIGC small model only relative to the remote AIGC large model, in terms of a smaller quantity of parameters and a smaller size. For example, the local AIGC small model has a billion-level parameter quantity, storage overheads of 2 GB to 4 GB, and computing power overheads of 10 TFLOP to 20 TFLOP.

A quantity of parameters of the remote AIGC large model is greater than that of the local AIGC small model by orders of magnitude. For example, the quantity of parameters of the remote AIGC large model is on the order of hundreds of billions to trillions, and the quantity of parameters of the local AIGC small model is on the order of one billion. The remote AIGC large model has storage overheads of 700 GB and computing power overheads of over 100 PTFLOPS, and the local AIGC small model has storage overheads of 2 GB to 4 GB and computing power overheads of 10 TFLOPS to 20 TFLOPS.

In an example, the local AIGC small model is an AIGC model obtained after processing such as knowledge distillation, quantization, and pruning is performed on the remote AIGC large model. A response output of the local AIGC small model is simpler than that of the remote AIGC large model, but response quality is still within an acceptable range of the user.

In another possible implementation, the input data includes a prompt (prompt). A specific implementation of obtaining the input data of the AIGC model is as follows: receiving data input by a user; obtaining an input text based on the data input by the user; obtaining context information of the input text; and obtaining the prompt based on the input text and the context information.

In this possible implementation, the prompt obtained based on the context information and the input text can more accurately reflect an intent of the user, so that the AIGC model can generate an output that better aligns with the intent of the user.

In another possible implementation, a specific implementation of obtaining the context information of the input text is as follows: obtaining a historical operation record and a historical chat record of the user; and obtaining the context information based on the historical operation record and the historical chat record.

For example, emotion information and a preference of the user are extracted from an operation record (for example, a web browsing record) and a chat record that are stored in the terminal, and corresponding tags are generated. These tags form the context information of the input text.

In another possible implementation, a specific implementation of obtaining the prompt based on the input text and the context information is as follows: using the input text and the context information as an input of a prompt generation model, and outputting the prompt. The prompt generation model is obtained through training based on a training dataset, the training dataset includes a plurality of training samples with tags, the training sample includes a text sentence and several text words, and the tag includes a prompt corresponding to the text sentence and the several text words.

The input text and the context information are input to the trained prompt generation model, to obtain a prompt that conforms to a syntax rule of the AIGC model, so that the user does not need to learn syntax or a paradigm of prompts of each AIGC model, thereby reducing learning costs and time costs of the user. This allows the user to obtain a response output that is of the AIGC model and that aligns with the intent of the user by directly interacting with the terminal according to a daily conversation habit of the user.

Optionally, the prompt generation model is a text generation network, for example, a multi-layer perceptron (multi-layer perceptron, MLP) network.

According to a second aspect, this application provides a content generation apparatus. The apparatus is deployed on a terminal device and includes an obtaining module, a sending module, a receiving module, and an input module. The obtaining module is configured to obtain input data of a content generation model. The sending module is configured to upload the input data to a server via a first routing path. The receiving module is configured to receive first content returned by the server, where the first content is generated, in response to the input data, by a first content generation model deployed on the server, and the first content generation model is a generative large model. The input module is configured to: when an abnormality occurs in obtaining the first content via the first routing path, input, via a second routing path, the input data to a locally deployed second content generation model, to obtain second content, where the abnormality is related to the first content generation model, and a quantity of parameters of the second content generation model is less than a quantity of parameters of the first content generation model.

In another possible implementation, the abnormality includes one or more of an abnormality in quality of content output by the generative large model in response to the input data and an abnormality in time at which the generative large model outputs the content in response to the input data.

In another example, the abnormality may alternatively be one or more of an abnormality in a communication link between the terminal device and the server, an abnormality in a response output of the first content generation model deployed on the server, and an abnormality of the server.

Optionally, the server is a cloud server.

In another possible implementation, an auxiliary small model is further deployed on the terminal device, and the auxiliary small model includes a multi-layer neural network. The second content generation model includes an output layer and a neural network with a plurality of intermediate layers. A specific implementation of inputting, via the second routing path, the input data to the locally deployed second content generation model, to obtain the second content is as follows: The input data is used as an input of the second content generation model, the input data is processed by the multi-layer neural network to obtain a first processing result, and the input data is processed by the neural network with a plurality of intermediate layers to obtain a second processing result; and the output layer processes the first processing result and the second processing result, and outputs the second content.

In another possible implementation, the input data includes a prompt. The obtaining module is specifically configured to: receive data input by a user; obtain an input text based on the data input by the user; obtain context information of the input text; and obtain the prompt based on the input text and the context information.

In another possible implementation, obtaining the context information of the input text includes: obtaining a historical operation record and a historical chat record of the user; and obtaining the context information based on the historical operation record and the historical chat record.

In another possible implementation, the context information includes one or more of emotion information of the user and preference information of the user.

In another possible implementation, a specific implementation of obtaining the prompt based on the input text and the context information is as follows: using the input text and the context information as an input of a prompt generation model, and outputting the prompt. The prompt generation model is obtained through training based on a training dataset, the training dataset includes a plurality of training samples with tags, the training sample includes a text sentence and several text words, and the tag includes a prompt corresponding to the text sentence and the several text words.

Optionally, the prompt generation model is a multi-layer perceptron network.

According to a third aspect, an embodiment of this application provides a computing device, including a memory and a processor. The memory stores instructions, and when the instructions are executed by the processor, the method according to the first aspect is implemented.

According to a fourth aspect, an embodiment of this application provides a computing device, including a memory and a processor. The memory stores instructions, and when the instructions are executed by the processor, the method according to the first aspect is implemented.

According to a fifth aspect, an embodiment of this application provides a computer-readable storage medium. The computer-readable storage medium stores a computer program, and when the computer program is executed by a processor, the method according to the first aspect is implemented.

According to a sixth aspect, this application further provides a computer program or a computer program product. The computer program or the computer program product includes instructions, and when the instructions are executed, a computer is enabled to perform the method according to the first aspect.

According to a seventh aspect, an embodiment of this application further provides a chip, including at least one processor and a communication interface. The processor is configured to perform the method according to the first aspect.

### BRIEF DESCRIPTION OF DRAWINGS

To describe technical solutions of a plurality of embodiments disclosed in this specification more clearly, the following briefly describes accompanying drawings used in describing embodiments. It is clear that the accompanying drawings in the following descriptions show merely the plurality of embodiments disclosed in this specification, and a person of ordinary skill in the art may still derive other accompanying drawings from these accompanying drawings without creative efforts.

The following briefly describes the accompanying drawings used in describing embodiments or the conventional technology.
FIG. 1 is a diagram of an example system 100 in which various methods and apparatuses described in this specification may be implemented according to embodiments disclosed in this application;
FIG. 2 is a schematic flowchart of a content generation method according to an embodiment of this application;
FIG. 3 is a diagram of interacting with a terminal in a speech manner;
FIG. 4 is a diagram of a prompt generation process according to an embodiment of this application;
FIG. 5 is a block diagram of content generation;
FIG. 6 is a diagram of a relationship between an auxiliary small model and a local model;
FIG. 7 is an overall block diagram of a system for a specific implementation of a content generation method according to an embodiment of this application;
FIG. 8 is a diagram of a structure of a content generation apparatus according to an embodiment of this application; and
FIG. 9 is a diagram of a structure of a terminal device according to an embodiment of this application.

### DESCRIPTION OF EMBODIMENTS

Currently, AI technologies have advanced to a new stage. It is an inevitable trend to use AI technologies to provide users with better intelligent usage experience, for example, Google Assistant (google assistant) and Stable Diffusion (stable diffusion). Google Assistant is a virtual assistant equipped with artificial intelligence, and can perform a two-way conversation. A user can interact with Google Assistant via a natural language/speech, thereby improving intelligence of a terminal device. Stable Diffusion is a deep learning model that can generate a corresponding image from a text description. However, Google Assistant and Stable Diffusion are both deployed on a terminal device, and mainly depend on local computing power. Due to insufficient computing power of the terminal, content output quality of Google Assistant and Stable Diffusion is poorer than that of a large model.

Currently, AI models are concentrated in ultra-large models, and a demand for computing power increases exponentially. However, terminal chips are subject to a plurality of constraints, such as area, power consumption, heat dissipation, and manufacturing process. Therefore, a computing power growth rate of the terminal chips is difficult to match rapidly increasing demands for AI computing. As a result, it is difficult for products such as Google Assistant to provide users with satisfactory capabilities.

Another approach to alleviating the computing power bottleneck of the terminal is edge-cloud collaboration through which a portion of workload is offloaded to a remote cloud server via a high-speed network connection. However, this solution also has a drawback: This solution is overly dependent on the network. In places with unstable network connections such as subways and elevators, a data transmission delay significantly increases, and there is even a possibility of interruption. This greatly affects user experience.

For example, ChatGPT and Midtravel are both deployed in the cloud and provide content generation services in the cloud. However, both ChatGPT and Midtravel have experienced service interruption, resulting in poor user experience.

To resolve the foregoing problem, an embodiment of this application provides a content generation method. A local AIGC small model is deployed on a terminal, and a remote AIGC large model is deployed on a server side, to achieve the following: When a communication link between the terminal and the server is normally connected, content is generated by the remote AIGC large model deployed on the server side, to obtain content with high quality; and when the remote AIGC model deployed on the server side responds abnormally, the locally deployed local AIGC small model is used to generate required content, so that a content generation service can still be continuously obtained when a network abnormality or a server abnormality occurs.

The technical solutions of this application are further described below in detail with reference to the accompanying drawings and embodiments.

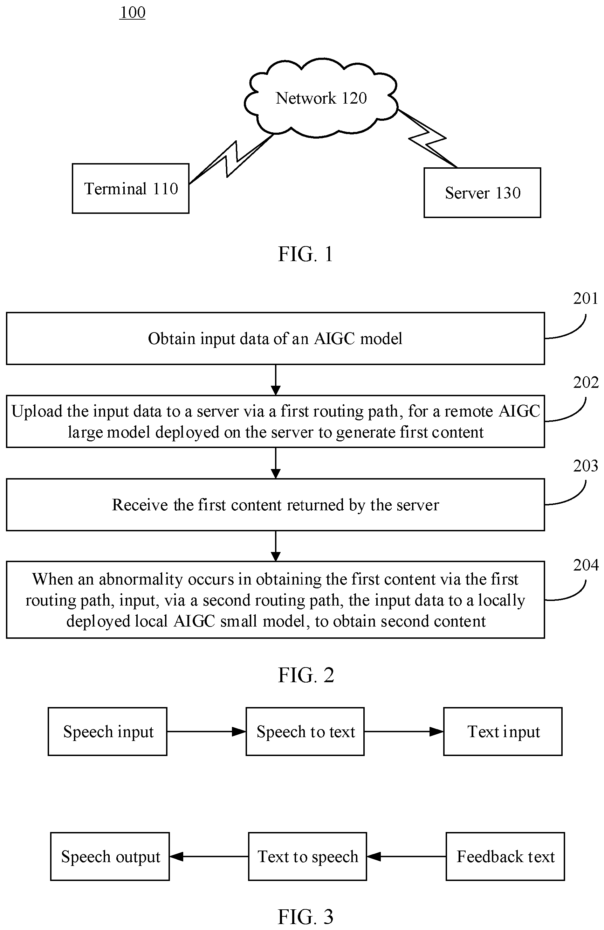

FIG. 1 is a diagram of an example system 100 in which various methods and apparatuses described in this specification may be implemented according to embodiments disclosed in this application. As shown in FIG. 1, the system 100 includes a terminal 110, a server 130, and a network 120 that communicatively connects the terminal 110 and the server 130. The terminal 110 may run one or more services or software applications that can perform a content generation method. A local AIGC small model is deployed on the terminal 110, and a remote AIGC large model is deployed on the server 130.

In some embodiments, the server 130 may further provide other services or software applications including a non-virtual environment and a virtual environment. In some embodiments, these services may be provided as web-based services or cloud services, for example, provided to a user of the terminal under a software-as-a-service (SaaS) model.

In the system shown in FIG. 1, the server 130 may include one or more components that implement functions performed by the server 130. These components may include software components, hardware components, or combinations thereof that may be executed by one or more processors. A user operating the terminal 110 may interact with the server 130 by sequentially using one or more client applications, thereby accessing services provided by these components. It should be understood that FIG. 1 is merely an example of a system configured to implement various methods described in embodiments of this application, and there may be another different configuration. This is not limited in embodiments of this application.

The user may send input data to the server 130 by using a content generation client on the terminal 110. The terminal 110 may provide an interface that allows the user of the terminal 110 to interact with the terminal. The terminal 110 may further output information to the user through the interface. After receiving the input data, the server 130 uses the input data as an input of the remote AIGC large model which outputs high-quality content in response. The server 130 feeds back the content to the terminal 110, and the terminal 110 presents the generated content to the user by using the content generation client. When the terminal 110 does not receive, within a preset time, the content fed back by the server 130, the terminal 110 invokes the local AIGC small model to generate content corresponding to the input data, and presents the generated content to the user by using the content generation client, to ensure that the user continuously obtains the content generation service.

The terminal 110 may include various types of computer devices, for example, a portable handheld device, a general-purpose computer (for example, a personal computer or a laptop computer), a workstation computer, and a wearable device. These computer devices may run various types and versions of software applications and operating systems, for example, Microsoft Windows, Apple IOS, UNIX-like operating systems, Linux, or Linux-based operating systems (for example, Google Chrome OS), or various mobile operating systems, for example, Microsoft Windows Mobile OS, Windows phone, Android and iPhone OS. The portable handheld device may include a cellular phone, a smartphone, a tablet computer, a personal digital assistant (PDA), and the like. The wearable device may include a head-mounted display, a smartwatch, and the like.

The network 120 may be any type of network known to a person skilled in the art, and may use any one of a plurality of available protocols, including but not limited to TCP/IP, SNA, IPX, 3G, 4G, 5G, and the like, to support data communication. For example, the one or more networks 120 may be a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (for example, Bluetooth and Wi-Fi), and/or any combination of these networks and/or other networks.

The server 130 may include one or more general-purpose computers, dedicated server computers (for example, a personal computer server, a UNIX server, or a terminal server), blade servers, mainframe computers, server clusters, or any other appropriate arrangements or combinations. The server 130 may include one or more virtual machines that run a virtual operating system, or another computing architecture related to virtualization, for example, one or more flexible pools that are of a logical storage device and that may be virtualized to maintain a virtual storage device of the server. In various embodiments, the server 130 may run one or more services or software applications that provide functions described below.

A computing unit in the server 130 may run one or more operating systems including any one of the foregoing operating systems and any commercially available server operating system. The server 130 may further run any one of various additional server applications and/or middle-tier applications, including an HTTP server, an FTP server, a CGI server, a JAVA server, a database server, and the like.

In some implementations, the server 130 may include one or more applications, to analyze and consolidate data feeds and/or event updates received from the user of the terminal 110. The server 130 may further include one or more applications, to display a data feed and/or a real-time event by using one or more display devices of the terminal 110.

In some implementations, the server 130 may be a server in a distributed system or a server integrated with a blockchain. The server 130 may alternatively be a cloud server, or an intelligent cloud computing server or an intelligent cloud host with an artificial intelligence technology. The cloud server is a host product in a cloud computing service system, to overcome drawbacks of difficult management and weak service scalability in a conventional physical host and a virtual private server (virtual private server, VPS) service.

The system 100 in FIG. 1 may be configured and operated in various manners, so that various methods and apparatuses provided in embodiments of this application can be used.

FIG. 2 is a schematic flowchart of a content generation method according to an embodiment of this application. The method may be implemented by the terminal 110 in FIG. 1, so that the terminal obtains a high-quality content generation response in an environment with a good network signal, and can still continuously obtain a content generation response in an environment with a poor network signal, thereby improving user experience. As shown in FIG. 2, the content generation method provided in this embodiment of this application includes at least step S201 to step S204.

Step S201: Obtain input data of an AIGC model.

The AIGC model in this embodiment of this application may be an AIGC model that outputs content of any type in response. For example, the content output by the AIGC model may be content of a type like a text, an image, a video, or an audio.

AIGC models that output different types of content may be applied to different task scenarios. For example, an AIGC model (for example, a ChatGPT model or a Pangu ChatGPT model) that outputs text content may be applied to a text creation scenario, for example, news writing, writing in a given format, and style rewriting. For example, a user may input a description or a requirement for a target article, and the model automatically collects data, performs creation based on an instruction described by the user, and outputs text content that meets the requirement of the user. AIGC models (for example, various AI drawing models that are popular currently) that output image content may be applied to an image creation scenario. For example, the AIGC model may generate an image work based on a text description input by the user. An AIGC model that outputs video content may be applied to a video creation scenario. An AIGC model that outputs audio content may be applied to an audio creation scenario, for example, a scenario in which the AIGC model is used to generate a virtual human voice.

An example in which the AIGC model is a Pangu ChatGPT model is used. Both an input and an output of the Pangu ChatGPT model are texts. The user may interact with a terminal in a plurality of manners, and input, to the terminal, text content that can express an intent of the user. Correspondingly, the terminal may also output, to the user in a plurality of manners, content generated by the model.

For example, the user may interact with the terminal in a text manner. The user directly inputs text data through an interaction interface provided by a content generation client deployed on the terminal, and then the content generation client feeds back, to the user in a text form, text content generated by the AIGC model.

For another example, the user may interact with the terminal in a speech manner. For example, the user inputs speech content to the terminal in a speech manner, then the terminal invokes a translation engine to translate the speech content into text content, the terminal invokes the translation engine to translate a feedback text output by the AIGC model in response into speech content, and the terminal outputs the speech content to the user (with reference to FIG. 3).

Certainly, the user may select, based on a requirement of the user, a manner of interacting with the terminal.

Optionally, the translation engine may implement mutual conversion between the speech content and the text content by deploying a speech recognition model.

The input data of the AIGC model is a text prompt that conforms to a paradigm or syntax of the AIGC model, and the prompt may be directly input by the user through the interaction interface of the content generation client.

For example, the user may directly input the prompt by interacting with the content generation client deployed on the terminal. For example, Pangu ChatGPT requires a text prompt as an information input source, and the user inputs several prompts through the content generation client. If the input information does not meet a minimum amount of information required for Pangu ChatGPT to execute a task, Pangu ChatGPT interacts with the user through the content generation client to obtain further information from the user. When collected information satisfies a necessary condition to start the task, Pangu ChatGPT performs an inference computation, generates a response, organizes the response as required by the user, and outputs the organized response to the user.

However, the manner in which the user directly inputs the prompt requires the user to learn the paradigm or the syntax of the prompt of the AIGC model. This demands a significant amount of learning costs and time costs from the user, and quality of the prompt directly affects quality of content generated by the AIGC model. As a result, quality of an input prompt varies depending on different learning degrees of the user, and quality of obtained content output by the AIGC model in response is different, affecting user experience.

In another example, to ensure consistent user experience, a manner of a prompt generation model may be used to obtain a prompt that conforms to the syntax or the paradigm of the AIGC model. For example, the prompt generation model automatically generates, based on an input text of the user, a prompt that conforms to the syntax or the paradigm of the AIGC model. For example, the input text of the user is used as an input of the prompt generation model, and a prompt that corresponds to the input text of the user and that conforms to the syntax or the paradigm of the AIGC model is output.

The input text of the user is input to a trained prompt generation model, to obtain a prompt that conforms to a syntax rule of the AIGC model, so that the user does not need to learn syntax or a paradigm of prompts of each AIGC model, thereby reducing learning costs and time costs of the user. This allows the user to obtain a response output that is of the AIGC model and that aligns with the intent of the user by directly interacting with the terminal according to a daily conversation habit of the user.

It may be understood that the input text of the user may be a text directly input by the user, or may be a text output by the translation engine through translation.

Optionally, the prompt generation model is a trained text generation network. For example, the text generation network may be an MLP network. In an example, the prompt generation model may be obtained through training in a supervised training manner. A training dataset includes a plurality of training samples, each training sample includes a text sentence with a tag, and the tag is a prompt that corresponds to the text sentence and that conforms to the syntax or the paradigm of the AIGC model. The training sample is used as an input of the prompt generation model, a prompt obtained through prediction is output, a loss is determined based on the prompt obtained through prediction and the tag, and a weight parameter of the prompt generation model is adjusted based on the loss. In this way, training iteration is performed until a training completion condition is satisfied, that is, the trained prompt generation model is obtained. Optionally, the training completion condition may be defined as reaching a preset quantity of training epochs, achieving model convergence, or the like.

Quality of content generated by the AIGC model based on the prompt is directly positively correlated with quality of the prompt. To obtain generated content with higher quality, specific rules and skills are required to obtain a prompt with higher quality. For example, the prompt needs to include one or more of current emotion information and preference information of the user.

In another example, to further obtain a prompt with higher quality and thus obtain a content output that better aligns with the intent of the user, generation of the prompt is further related to context (context) of the input text of the user. The context includes one or more of the current emotion information of the user and the preference information of the user.

Context information of the input text may be obtained through extraction of a historical operation record and a historical chat record of the user. For example, emotion information, a preference, and personal related information of the user are obtained through extraction of an operation record (for example, a web browsing record) and a chat record that are stored in the terminal, and corresponding tags (tags), for example, including an emotion tag and a preference tag, are generated. These tags form the context information of the input text. In another example, the historical operation record of the user may be a historical operation record from previous 24 hours, and the historical chat record of the user may be a historical chat record from the previous 24 hours. During extraction of the context information, information extracted from records closer in time to current time (where the current time may be understood as a time point at which the user interacts with the content generation client to input data) indicates a greater weight, and information extracted from records further in time from the current time indicates a smaller weight. For example, a weight of information extracted from a historical operation record and a historical chat record from one hour prior to the current time is the greatest, and a weight of information extracted from a historical operation record and a historical chat record from 24 hours prior to the current time is the smallest. Finally, the context information of the input text is obtained by performing weighting based on information extracted from records from each hour prior to the current time. In other words, the information extracted from the historical operation record and the historical chat record that are closer in time can better represent the current emotion, the preference, and the personal related information of the user.

Certainly, in some other examples, time granularities of the historical operation record of the user and the historical chat record of the user may be larger or smaller. For example, the historical operation record of the user and the historical chat record of the user may be historical records from one week prior to the current time. Historical records from one day to seven days prior to the current time are separately extracted, and then the context information of the input text is obtained through weighting. Alternatively, the historical operation record and the historical chat record of the user may be historical records from one hour prior to the current time. Historical records from 10 minutes to 60 minutes prior to the current time are separately extracted, and then the context information of the input text is obtained through weighting.

Optionally, that the context information of the input text is obtained through extraction of an operation record and a chat record that are stored in the terminal may be implemented by using an AI semantic model. The operation record and the chat record that are stored in the terminal are used as an input of the AI language model, and an emotion tag and a preference tag are output, to obtain the context information of the input text.

The prompt of the AIGC model is obtained based on the input text of the user and the context information of the input text. For example, the input text and the context information are used as an input of the prompt generation model, and the prompt is output. The prompt generation model is obtained through training based on a training dataset, the training dataset includes a plurality of training samples with tags, the training sample includes a text sentence and several text words, and the tag includes a prompt corresponding to the text sentence and the several text words. The training sample is used as an input of the prompt generation model, a prompt obtained through prediction is output, a loss is determined based on the prompt obtained through prediction and the tag, and a weight parameter of the prompt generation model is adjusted based on the loss. In this way, training iteration is performed until a training completion condition is satisfied, that is, the trained prompt generation model is obtained. Optionally, the training completion condition may be defined as reaching a preset quantity of training epochs, achieving model convergence, or the like.

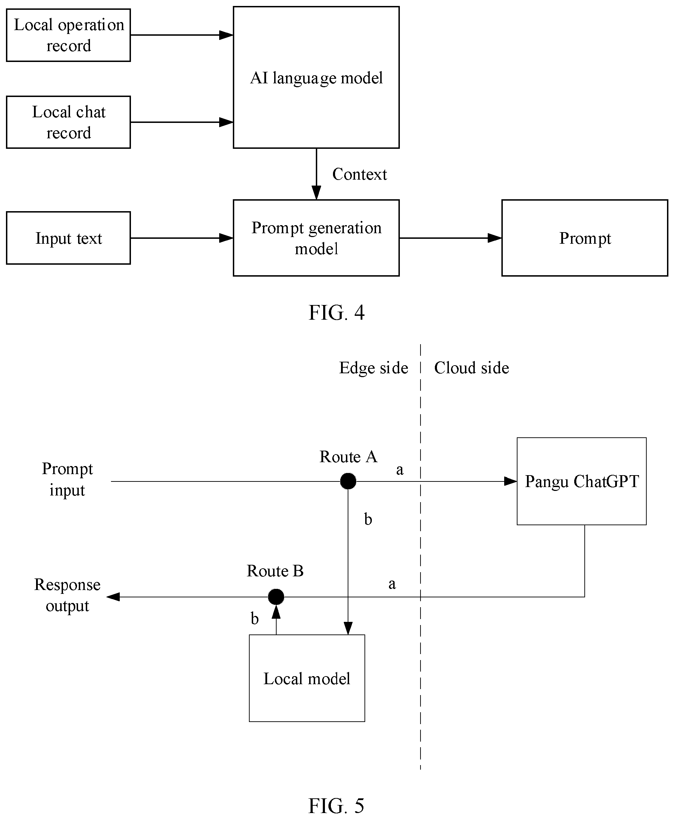

FIG. 4 is a diagram of a prompt generation process according to an embodiment of this application.

The prompt supplemented with the context information can more accurately reflect the intent of the user and better align with a syntax preference of the AIGC model. In this way, the AIGC model can provide an output that better aligns with the intent of the user, thereby achieving a goal of "The AIGC model understands you better".

For example, output content of the AIGC model is an image, and an AI drawing task may be completed based on a prompt input by the user. The user is in a very angry mood at this moment and wants the AIGC model to create a picture that can express the current mood of the user. The input text of the user is "Draw a phoenix on fire on a phoenix tree", and a prompt generated without supplementing the context information may be "on fire, phoenix, and phoenix tree". In response to the input prompt, the AIGC model generates a picture of a phoenix on fire on a phoenix tree. However, the user may feel that the fire on the phoenix is not intense enough to express the current anger of the user. By extracting the historical operation record of the user and/or the historical chat record of the user, it is identified that the emotion information of the user is "angry". An emotion tag is added to the prompt, to obtain a prompt "angry, on fire, phoenix, and phoenix tree" that can express the emotion information of the user. In response to the input prompt, the AIGC model generates a picture of a fire phoenix whose entire body is radiating blazing flames on a phoenix tree. The user obtains an AI-generated artwork that aligns with the intent of the user, and feels deeply understood by the AIGC model. This improves user experience.

For another example, the input text of the user is "Draw Sam running" and a prompt generated without supplementing the context information may be "running and Sam". In response to the input prompt, the AIGC model may generate a picture of a little boy running. However, Sam is a pet dog of the user, and a true intent expressed by the user is to create a picture of his/her pet dog running. By extracting the historical operation record of the user and/or the historical chat record of the user, it is identified that Sam is actually a pet dog owned by the user, and an appearance feature of Sam is obtained. True information of Sam is added to the prompt, to obtain a prompt "running, dog" that can express the preference information of the user. In response to the input prompt, the AIGC model generates a picture of a running dog, where an appearance feature of the dog matches the appearance feature of Sam owned by the user, so that the user obtains an AI-generated artwork that aligns with the intent of the user.

Step S202: Upload the input data to a server via a first routing path, for a remote AIGC large model deployed on the server to generate first content.

Optionally, the server may be a cloud server. To be specific, the remote AIGC large model is deployed in the cloud, to provide a high-quality content generation service for the user.

After obtaining the prompt that can express the intent of the user, the content generation client preferentially sends, via the first routing path, the prompt to the remote AIGC large model deployed in the cloud. In response to the input prompt, the remote AIGC large model generates and outputs content that aligns with the intent of the user.

Step S203: Receive the first content returned by the server.

After the remote AIGC large model deployed in the cloud infers and generates the content that aligns with the intent of the user, the content is fed back to the terminal, and the first content is presented to the user by using the content generation client deployed on the terminal.

Step S204: When an abnormality occurs in obtaining the first content via the first routing path, input, via a second routing path, the input data to a locally deployed local AIGC small model, to obtain second content.

The terminal preferentially inputs the prompt to the remote AIGC large model deployed on a cloud side, and content required by the user is generated by the remote AIGC large model. When the abnormality occurs, the terminal inputs the prompt to the locally deployed local AIGC small model, and the required content is generated by the locally deployed local AIGC small model. In this way, the content generation service can still be continuously obtained when the cloud side responds abnormally.

The abnormality may be understood as an abnormality in obtaining content by the terminal due to a response abnormality of the generative large model deployed at the remote end, for example, one or more of an abnormality in quality of content output by the generative large model in response to the input data and an abnormality in time at which the generative large model outputs the content in response to the input data.

For example, due to a large quantity of parameters (usually reaching a level of hundreds of billions or trillions) of the generative large model, the generative large model may experience a phenomenon of "cognitive degradation" after a training update. For example, accuracy of a generated answer is reduced, or a generated answer is irrelevant to or misaligned with a question. For another example, the generative large model is deployed in the cloud to provide a content generation cloud service for the public. When there are a large quantity of access users, an inference time of the generative large model may be excessively long due to insufficient computing power, leading to an excessively long response time for the users.

In another example, the abnormality may also include an abnormality that causes the terminal to fail to receive a response from the remote AIGC large model, or causes the terminal to fail to receive a response from the remote AIGC large model within a preset time, for example, one or more of an abnormality in a communication link between a terminal device and the server, an abnormality in a response output of a first content generation model deployed on the server, and an abnormality of the server.

For example, the terminal may detect whether a content response generated by the remote AIGC large model is received within a preset time period (for example, the preset time period may be 1 minute) after the prompt is sent to the cloud side. If the terminal detects that the content response generated by the remote AIGC large model is not received within the preset time period, the prompt is input to the locally deployed local AIGC small model, and the required content is generated by the locally deployed local AIGC small model.

For another example, the terminal may detect whether the communication link between the terminal and the cloud server is abnormal. For example, when the terminal is in an environment with a poor network signal or an environment without a network signal, like an elevator, a subway, or an airplane, the terminal detects that the communication link between the terminal and the cloud server is abnormal, which causes a problem in information sending or receiving. In this case, the prompt is input to the locally deployed local AIGC small model, and the required content is generated by the locally deployed local AIGC small model.

For another example, an abnormality occurs in the response output of the remote AIGC large model deployed on the cloud server, and the terminal receives a message indicating that the content generation service is abnormal from the cloud side. The terminal inputs the prompt to the locally deployed local AIGC small model, and the required content is generated by the locally deployed small AIGC model.

For another example, an abnormality occurs on the cloud server on which the remote AIGC large model is deployed, and the terminal receives a notification message indicating occurrence of the abnormality from the cloud side. The terminal inputs the prompt to the locally deployed local AIGC small model, and the required content is generated by the locally deployed local AIGC small model.

For example, if Pangu ChatGPT is used as the remote AIGC large model, the local AIGC small model may be briefly referred to as a local model. FIG. 5 is a block diagram of content generation. As shown in FIG. 5, two soft routes are deployed on the terminal, including a route A and a route B. After the terminal obtains the prompt input, both the route A and the route B preferentially select a path a, and send a prompt to Pangu ChatGPT deployed on the cloud side, to obtain high-quality content output by Pangu ChatGPT deployed on the cloud side in response. When the communication link is abnormal or Pangu ChatGPT on the cloud side responds abnormally, the route A and the route B select a path b, and the terminal loads the local model to temporarily replace Pangu ChatGPT on the cloud side to provide a timely feedback output for the user.

It may be understood that a quantity of parameters of the remote AIGC large model is greater than that of the local AIGC small model by orders of magnitude. For example, the quantity of parameters of the remote AIGC large model is on the order of hundreds of billions to trillions, and the quantity of parameters of the local AIGC small model is on the order of one billion. The remote AIGC large model has storage overheads of 700 GB and computing power overheads of over 100 PTFLOPS, and the local AIGC small model has storage overheads of 2 GB to 4 GB and computing power overheads of 10 TFLOPS to 20 TFLOPS.

Optionally, the local AIGC small model is an AIGC model obtained after processing such as knowledge distillation, quantization, and pruning is performed on the remote AIGC large model. A response output of the local AIGC small model is simpler than that of the remote AIGC large model, but response quality is still within an acceptable range of the user.

In another example, the local AIGC small model and the remote AIGC large model may alternatively be generative models separately obtained through training. However, the local AIGC small model and the remote AIGC large model output content in a same format in response to same input data. For example, in response to the input data, the local AIGC small model and the remote AIGC large model output content in a picture format, content in a text format, or the like.

In another example, an auxiliary small model is further deployed on the terminal device, and the auxiliary small model includes a multi-layer neural network. When the communication link is abnormal or Pangu ChatGPT on the cloud side responds abnormally, the terminal uses the prompt as an input of both the local model and the auxiliary small model, the prompt is processed by the multi-layer neural network to obtain a first processing result, and the prompt is processed by a neural network with a plurality of intermediate layers of the local model to obtain a second processing result; and an output layer of the local model processes the first processing result and the second processing result, and outputs second content.

The auxiliary small model is disposed on the terminal, and the auxiliary small model and the local AIGC small model work collaboratively, to achieve a response output that meets some customized requirements of the user. For example, different users may have different preferences. For example, some users may want to interact by using modern texts. In this case, an auxiliary small model may be trained on modern texts. After the auxiliary small model acts on the local AIGC small model, the output layer of the local AIGC small model outputs a modern text that meets the user preference. However, some users may prefer "zhuaiwen" (a showy, classically-inspired style), favoring interaction in classical Chinese. In this case, an auxiliary small model may be trained on classical Chinese texts. After the auxiliary small model acts on the local AIGC small model, the output layer of the local AIGC small model outputs a modern text that meets the user preference.

It may be understood that the auxiliary small model is similar to a patch of conventional software, and provides functions including but not limited to fault remediation, feature enhancement, and the like.

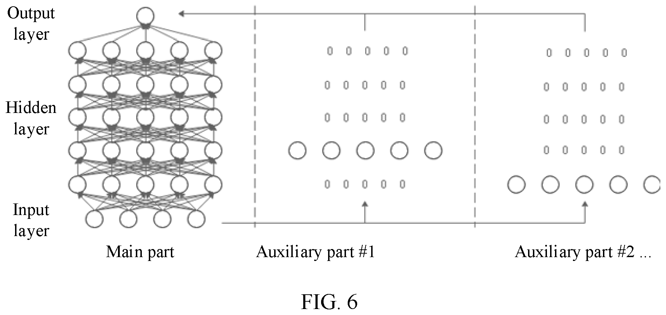

The auxiliary small model may be referred to as an auxiliary part, and the local AIGC small model may be referred to as a main part. Optionally, the auxiliary part includes only weight information of a portion of intermediate layers. Therefore, a size of the auxiliary part is generally much smaller than that of the main part, and computing workload of the terminal is not significantly increased. A main neural network can simultaneously load a plurality of auxiliary neural networks, to implement different functions or objectives. A relationship between the main neural network and the plurality of auxiliary neural networks is shown in FIG. 6.

After neural networks of the main part and the auxiliary part are loaded, input data is fed to these neural networks at the same time. After respective computation, results are aggregated at the output layer. The auxiliary neural network exerts impact on a result of the main network through weight configuration at a corresponding layer, to finally obtain personalized output content for each user, thereby improving user experience.

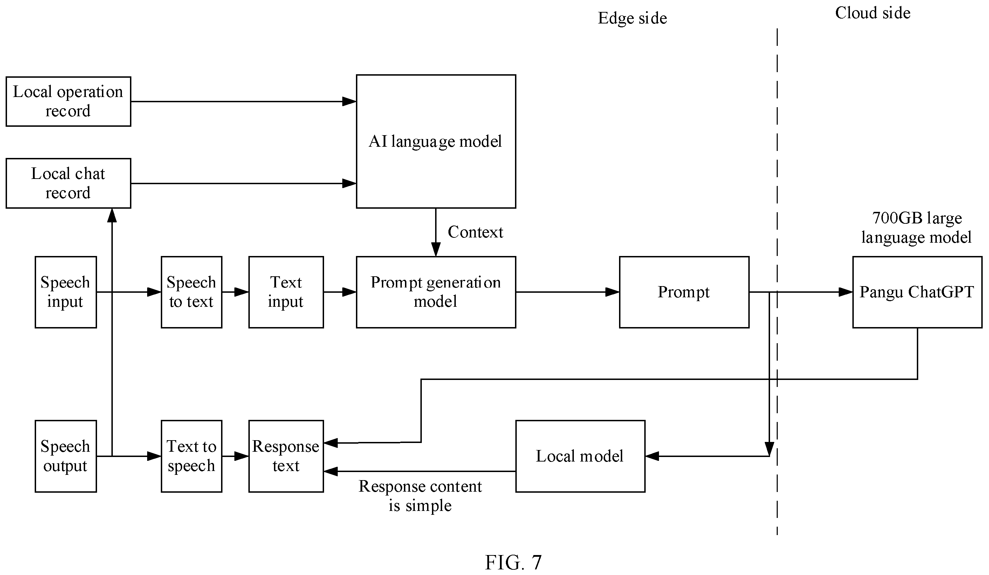

FIG. 7 is an overall block diagram of a system for a specific implementation of the content generation method according to an embodiment of this application. As shown in FIG. 7, the user interacts with the content generation client on the terminal, and inputs chat information in a speech manner. The terminal generates an emotion tag and a preference tag based on an operation record and a chat record of the user in a local application. The terminal uses an input text (a text generated by translating speech input by the user by a translation engine) of the user, the emotion tag, and the preference tag as an input of the prompt generation model, outputs a prompt that aligns with characteristics of Pangu ChatGPT, sends the prompt to Pangu ChatGPT on the cloud side through a network, and waits for a response. Pangu ChatGPT on the cloud side generates a high-quality content output text in response to the prompt. The content output text is translated into speech by the translation engine and output to the user. When an abnormality occurs in data transmission or feedback on the cloud side, a route deployed on the terminal switches to and activates a local model to provide timely feedback. An output of the local model is simpler than that of ChatGPT on the cloud side.

For example, output content of ChatGPT on the cloud side in response to the prompt is more detailed and lengthy (for example, approximately 1000 words), and includes some related network links. Output content of the local model in response to the prompt is concise and brief (for example, 100 words), and does not include related network links.

Based on a same concept as the foregoing embodiment of the content generation method, an embodiment of this application further provides a content generation apparatus 800. The content generation apparatus 800 may be deployed on the terminal 110 shown in FIG. 1, to achieve the following: When a network environment is good, high-quality content is obtained by using a remote AIGC large model deployed on a cloud side; and when a network signal is abnormal, timely content feedback can still be obtained by using a locally deployed local AIGC small model. The content generation apparatus 800 includes units or modules configured to implement the steps in the content generation method shown in FIG. 2 to FIG. 7.

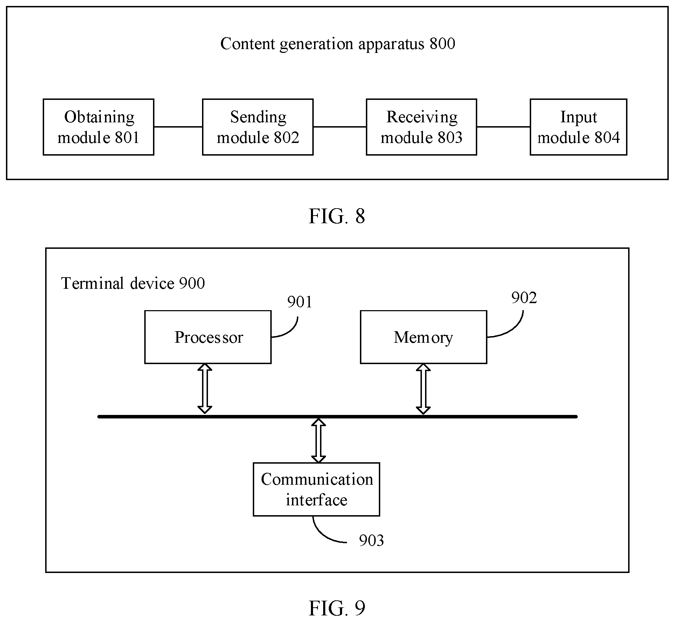

FIG. 8 is a diagram of a structure of a content generation apparatus according to an embodiment of this application. As shown in FIG. 8, the content generation apparatus 800 includes at least an obtaining module 801, a sending module 802, a receiving module 803, and an input module 804. The obtaining module 801 is configured to obtain input data of a content generation model. The sending module 802 is configured to upload the input data to a server via a first routing path. The receiving module 803 is configured to receive first content returned by the server, where the first content is generated, in response to the input data, by a first content generation model deployed on the server, and the first content generation model is a generative large model. The input module 804 is configured to: when an abnormality occurs in obtaining the first content via the first routing path, input, via a second routing path, the input data to a locally deployed second content generation model, to obtain second content, where the abnormality is related to the first content generation model, and a quantity of parameters of the second content generation model is less than a quantity of parameters of the first content generation model.

In another possible implementation, the abnormality includes one or more of an abnormality in quality of content output by the generative large model in response to the input data and an abnormality in time at which the generative large model outputs the content in response to the input data.

In another example, the abnormality may alternatively include one or more of an abnormality in a communication link between a terminal device and the server, an abnormality in a response output of the first content generation model deployed on the server, and an abnormality of the server.

Optionally, the server is a cloud server.

In another possible implementation, an auxiliary small model is further deployed on the terminal device, and the auxiliary small model includes a multi-layer neural network. The second content generation model includes an output layer and a neural network with a plurality of intermediate layers. A specific implementation of inputting, via the second routing path, the input data to the locally deployed second content generation model, to obtain the second content is as follows: The input data is used as an input of the second content generation model, the input data is processed by the multi-layer neural network to obtain a first processing result, and the input data is processed by the neural network with a plurality of intermediate layers to obtain a second processing result; and the output layer processes the first processing result and the second processing result, and outputs the second content.

In another possible implementation, the input data includes a prompt. The obtaining module 801 is specifically configured to: receive data input by a user; obtain an input text based on the data input by the user; obtain context information of the input text; and obtain the prompt based on the input text and the context information.

In another possible implementation, obtaining the context information of the input text includes: obtaining a historical operation record and a historical chat record of the user; and obtaining the context information based on the historical operation record and the historical chat record.

In another possible implementation, the context information includes one or more of emotion information of the user and preference information of the user.

In another possible implementation, a specific implementation of obtaining the prompt based on the input text and the context information is as follows: using the input text and the context information as an input of a prompt generation model, and outputting the prompt. The prompt generation model is obtained through training based on a training dataset, the training dataset includes a plurality of training samples with tags, the training sample includes a text sentence and several text words, and the tag includes a prompt corresponding to the text sentence and the several text words.

Optionally, the prompt generation model is a multi-layer perceptron network.

The content generation apparatus 800 according to this embodiment of this application may correspondingly perform the method described in embodiments of this application. In addition, the foregoing and other operations and/or functions of the modules in the content generation apparatus 800 are separately intended to implement corresponding procedures of the method in FIG. 2 to FIG. 7. For brevity, details are not described herein again.

An embodiment of this application further provides a terminal device, including at least one processor, a memory, and a communication interface. The processor is configured to perform the method in FIG. 2 to FIG. 7.

FIG. 9 is a diagram of a structure of a terminal device according to an embodiment of this application.

As shown in FIG. 9, the terminal device 900 includes at least one processor 901, a memory 902, and a communication interface 903. The processor 901, the memory 902, and the communication interface 903 are communicatively connected. The communication connection may be implemented in a wired manner (for example, by using a bus), or the communication connection may be implemented in a wireless manner. The communication interface 903 is configured to send and/or receive data sent by another device. For example, the terminal sends a prompt to a remote AIGC large model deployed on a cloud side, and receives content output by the remote AIGC large model deployed on the cloud side in response. The memory 902 stores computer instructions, and the processor 901 executes the computer instructions to perform the content generation method in the foregoing method embodiment, to achieve the following: When the generative large model deployed on a remote server side responds normally, content is generated by using the generative large model deployed on the server side, to obtain high-quality content; and when the content generation model deployed on the server side responds abnormally, a locally deployed miniaturized content generation model is used to generate required content, so that a content generation service can still be continuously obtained when the generative large model deployed on the server side is abnormal.

It should be understood that, in this embodiment of this application, the processor 901 may be a central processing unit CPU, or the processor 901 may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like.

The memory 902 may include a read-only memory and a random access memory, and provides instructions and data to the processor 901. The memory 902 may further include a non-volatile random access memory.

The memory 902 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be understood that the terminal device 900 according to this embodiment of this application may implement the method shown in FIG. 2 to FIG. 7 in embodiments of this application. For detailed descriptions of implementation of the method, refer to the foregoing descriptions. For brevity, details are not described herein again.

An embodiment of this application provides a computer-readable storage medium. The computer-readable storage medium stores a computer program, and when the computer instructions are executed by a processor, the foregoing method is implemented.

An embodiment of this application provides a chip. The chip includes at least one processor and an interface. The at least one processor determines program instructions or data through the interface. The at least one processor is configured to execute the program instructions to implement the foregoing method.

An embodiment of this application provides a computer program or a computer program product. The computer program or the computer program product includes instructions. When the instructions are executed, a computer is enabled to perform the foregoing method.

A person skilled in the art may be further aware that the units and algorithm steps in the examples described with reference to embodiments disclosed in this specification may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

The steps of the methods or algorithms described in embodiments disclosed in this specification may be implemented by hardware, a software module executed by a processor, or a combination of hardware and a software module executed by the processor. The software module may be configured in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, or improvement made without departing from the spirit and principle of this application should fall within the protection scope of this application.

## Claims

1. A content generation method, applied to a terminal device, wherein the method comprises:
obtaining input data of a content generation model;
uploading the input data to a server via a first routing path;
receiving the first content returned by the server, wherein the first content is generated by a first content generation model deployed on the server, and the first content generation model is a generative large model; and
when an abnormality occurs in obtaining the first content via the first routing path, inputting, via a second routing path, the input data to a locally deployed second content generation model, to obtain second content, wherein the abnormality is related to the first content generation model, and
a quantity of parameters of the second content generation model is less than a quantity of parameters of the first content generation model.

2. The method according to claim 1, wherein the abnormality comprises one or more of an abnormality in quality of content output by the first content generation model and an abnormality in time at which the first content generation model outputs the first content in response to the input data.

3. The method according to claim 1 or 2, wherein the server is a cloud server.

4. The method according to any one of claims 1 to 3, wherein an auxiliary small model is further deployed on the terminal device, the auxiliary small model comprises a multi-layer neural network, and the second content generation model comprises an output layer and a neural network with a plurality of intermediate layers; and
inputting, via the second routing path, the input data to the locally deployed second content generation model, to obtain the second content comprises:
using the input data as an input of both the second content generation model and the auxiliary small model, wherein the input data is processed by the multi-layer neural network to obtain a first processing result, and the input data is processed by the neural network with a plurality of intermediate layers to obtain a second processing result; and
processing, by the output layer, the first processing result and the second processing result, and outputting the second content.

5. The method according to any one of claims 1 to 4, wherein the input data comprises a prompt; and
obtaining the input data of the content generation model comprises:
receiving data input by a user;
obtaining an input text based on the data input by the user;
obtaining context information of the input text; and
obtaining the prompt based on the input text and the context information.

6. The method according to claim 5, wherein obtaining the context information of the input text comprises:
obtaining a historical operation record and a historical chat record of the user; and
obtaining the context information based on the historical operation record and the historical chat record.

7. A content generation apparatus, deployed on a terminal device, wherein the apparatus comprises:
an obtaining module, configured to obtain input data of a content generation model;
a sending module, configured to upload the input data to a server via a first routing path;
a receiving module, configured to receive the first content returned by the server, wherein the first content is generated by a first content generation model deployed on the server, and the first content generation model is a generative large model; and
an input module, configured to: when an abnormality occurs in obtaining the first content via the first routing path, input, via a second routing path, the input data to a locally deployed second content generation model, to obtain second content, wherein the abnormality is related to the first content generation model, and
a quantity of parameters of the second content generation model is less than a quantity of parameters of the first content generation model.

8. The apparatus according to claim 7, wherein the abnormality comprises one or more of an abnormality in quality of content output by the first content generation model and an abnormality in time at which the first content generation model outputs the first content in response to the input data.

9. The apparatus according to claim 7 or 8, wherein the server is a cloud server.

10. The apparatus according to any one of claims 7 to 9, wherein an auxiliary small model is further deployed on the terminal device, the auxiliary small model comprises a multi-layer neural network, and the second content generation model comprises an output layer and a neural network with a plurality of intermediate layers; and
inputting, via the second routing path, the input data to the locally deployed second content generation model, to obtain the second content comprises:
using the input data as an input of both the second content generation model and the auxiliary small model, wherein the input data is processed by the multi-layer neural network to obtain a first processing result, and the input data is processed by the neural network with a plurality of intermediate layers to obtain a second processing result; and
processing, by the output layer, the first processing result and the second processing result, and outputting the second content.

11. The apparatus according to any one of claims 7 to 10, wherein the input data comprises a prompt; and
the obtaining module is specifically configured to:
receive data input by a user;
obtain an input text based on the data input by the user;
obtain context information of the input text; and
obtain the prompt based on the input text and the context information.

12. The apparatus according to claim 11, wherein obtaining the context information of the input text comprises:
obtaining a historical operation record and a historical chat record of the user; and
obtaining the context information based on the historical operation record and the historical chat record.

13. A terminal, comprising a memory and a processor, wherein the memory stores instructions, and when the instructions are executed by the processor, the method according to any one of claims 1 to 6 is implemented.

14. A chip, comprising at least one processor and a communication interface, wherein the processor is configured to perform the method according to any one of claims 1 to 6.

15. A computing device, comprising a memory and a processor, wherein the memory stores instructions, and when the instructions are executed by the processor, the method according to any one of claims 1 to 6 is implemented.

16. A computer-readable storage medium, wherein the computer-readable storage medium stores a computer program, and when the computer program is executed by a processor, the method according to any one of claims 1 to 6 is implemented.
